Europäisches Patentamt

European Patent Office

Office européen des brevets

(11) Publication number: **0 058 395**
**B1**

(12) **EUROPEAN PATENT SPECIFICATION**

(45) Date of publication of patent specification: **27.11.85**

(21) Application number: **82101015.4**

(22) Date of filing: **11.02.82**

(51) Int. Cl.⁴: **G 11 B 33/06, G 11 B 3/00**

(54) **Continuous playback device including a phonographic disk player for use in dolls and the like.**

(30) Priority: **13.02.81 IT 2079081 u**

(43) Date of publication of application:
**25.08.82 Bulletin 82/34**

(45) Publication of the grant of the patent:
**27.11.85 Bulletin 85/48**

(84) Designated Contracting States:
**DE FR GB**

(56) References cited:
**DE-A-2 621 949**
**FR-A-2 450 491**
**US-A-4 198 057**

(73) Proprietor: **Biasi, Adriano**
**Via Ussaro V, 2**
**I-20080 Zibido San Giacomo (Prov. of Milano)**
**(IT)**
(73) Proprietor: **Binaghi, Giovanni**
**Via Toscana, 25**
**I-20094 Buccinasco (Prov. of Milano) (IT)**

(72) Inventor: **Biasi, Adriano**
**Via Ussaro V, 2**
**I-20080 Zibido San Giacomo (Prov. of Milano)**
**(IT)**
Inventor: **Binaghi, Giovanni**
**Via Toscana, 25**
**I-20094 Buccinasco (Prov. of Milano) (IT)**

(74) Representative: **Modiano, Guido et al**
**MODIANO & ASSOCIATI S.A.S. Via Meravigli, 16**
**I-20123 Milan (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a continuous playback device including a phonographic disk player for use in dolls and the like.

Known and currently employed are doll disk record players having a continuous playback device, namely a device operative to automatically bring the stylus carrying arm back to a phonographic disk initial or starting position at the end of the phonographic disk playing. A device of this kind is described in FR—A—2450491.

A device of that kind is also described in Italian patent application No. 21 345 B/80, filed on March 31, 1980 by these same Applicants and published on September 30, 1981 which comprises a mechanism for controlling the stylus carrying arm including a clutch for selectively transmitting rotatory motion to an axially shiftable coupling member of the clutch. Such coupling member is normally caused to rotate together with the disk carrying plate of the player and is stopped from rotation only during a short time interval, during which disengagement of the stylus carrying arm from the phonographic disk occurs. Thus, most of the time the coupling member rotates and therefore in addition to supplemental energy consumption it is also subject to rapid wear at the bearing points thereof and produces noise during rotation. When it is considered that the record player is actuated by small electrical batteries and that it is important to reduce to a minimum the manufacturing cost and the noise of moving component parts, the above drawbacks of the coupling member will appear relevant.

Accordingly, the object of this invention is to provide a continuous playback device including a phonographic disk player for use in dolls and the like, the construction of which is simpler.

A particular object of the invention is to simplify the mechanism for controlling the stylus carrying arm of the player.

The invention, which achieves the above objects is defined in appended claim 1.

There follows a detailed description of a continuous playback device including a phonographic disk player for use in dolls and the like, according to the invention, with reference to the accompanying illustrative drawings, where:

Figure 1 shows a perspective view of the loudspeaker and related supporting arm;

Figure 2 shows in perspective the phonographic carrier plate and clutch unit;

Figures 3—7 show in side elevation this continuous playback device at various disk playing stages thereof;

Figures 8—11 show in side elevation the whole phonographic disk player, as incorporating this continuous playback device, at various phonographic disk playing stages; and

Figures 12 to 16 illustrate a modified outer configuration of the box-like casing, respectively in perspective, top plan, bottom plan, side and end views.

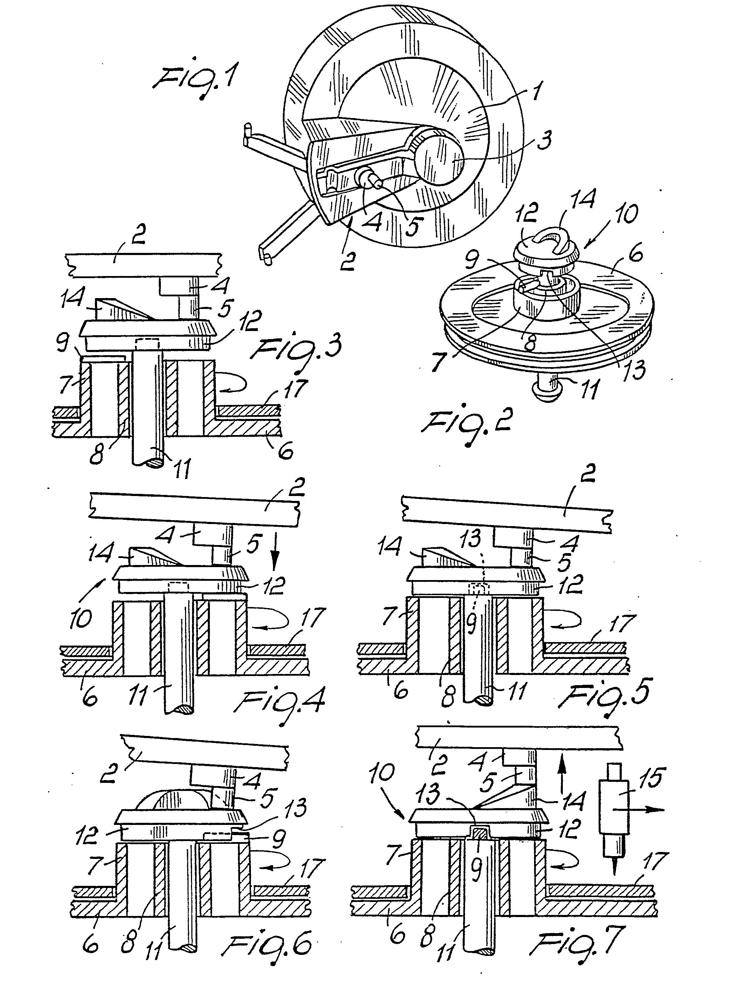

With reference to Figure 1, there is indicated at 1 the loudspeaker, which is of conical shape and conventional type. Said loudspeaker 1 is supported on an arm, generally indicated at 2.

The arm 2 has a raised portion 3 of circular shape at one end thereof, a second raised portion 4 formed with a pin 5 at the middle region thereof.

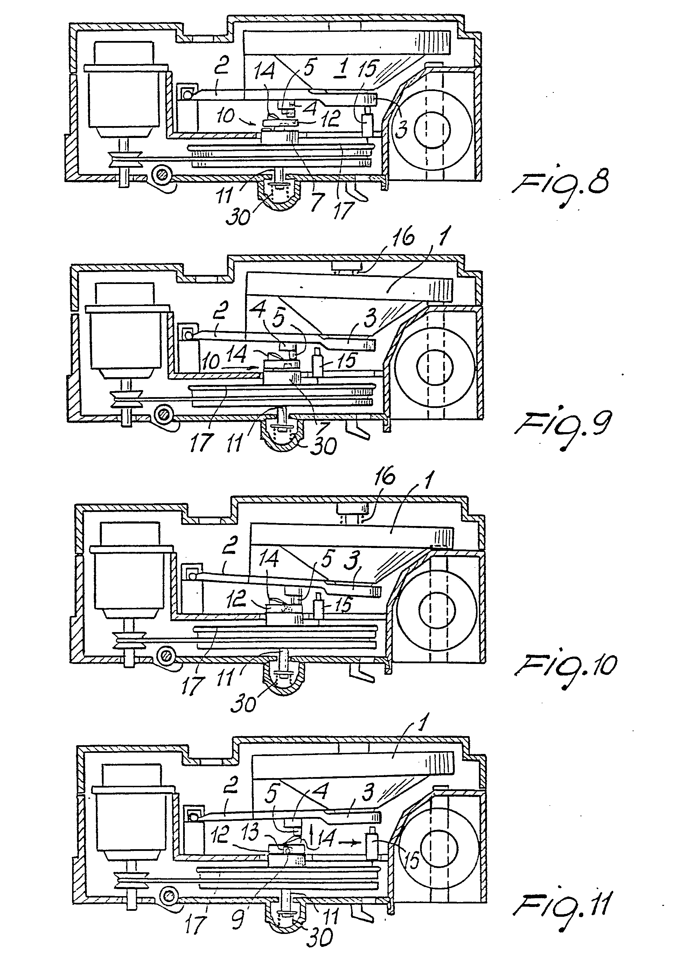

In a conventional manner, and as shown in Figures 8—11, the arm 2 of the loudspeaker 1 overlies the path of movement of the stylus carrying arm 15, it bearing onto the latter during the record playing stage. A spring 16 biases the loudspeaker 1, and hence its arm 2, against the stylus carrying arm 15 and prevents the latter from returning toward the phonographic disk initial or starting position, against the action of a spring (not shown).

With reference to Figures 2—7, the phonographic disk carrier plate 6, supporting the phonographic disk 17, is bored centrally and has two bushes 7 and 8 of cylindrical shape and arranged concentrically. In a radial direction and bearing on the two bushes, there extends a projection 9. The clutch unit 10 comprises coupling member 11, 12 with a leg or stem 11 which extends along the axis of the phonographic disk carrier plate 6 internally to the bush 8, and which is urged toward the arm 2 by a spring 30 acting, at its other end, against the box-like body of the record player. The coupling member 11, 12 comprises at the top of its stem 11 a small disk 12 which has, on its bottom face, a radial groove 13 corresponding to the projection 9 and adapted to engage and rotatively entrain the clutch unit 10 to follow the phonographic disk carrier plate 6 as the elastic bias of the spring 30 is overcome. On its top face, the small disk 12 has a protrusion 14 of variable height which, in the example shown, has the form of an annulus.

Said protrusion 14, when the clutch unit 10 is rigid with the phonographic disk carrier plate 6 and rotates therewith, will interfere with the pin 5 on the loudspeaker arm, causing the latter to be raised and enabling the stylus carrying arm 15 to free itself and return to the record initial position. It will be understood that the protrusion 14 and the pin 5 act as cam and cam follower respectively.

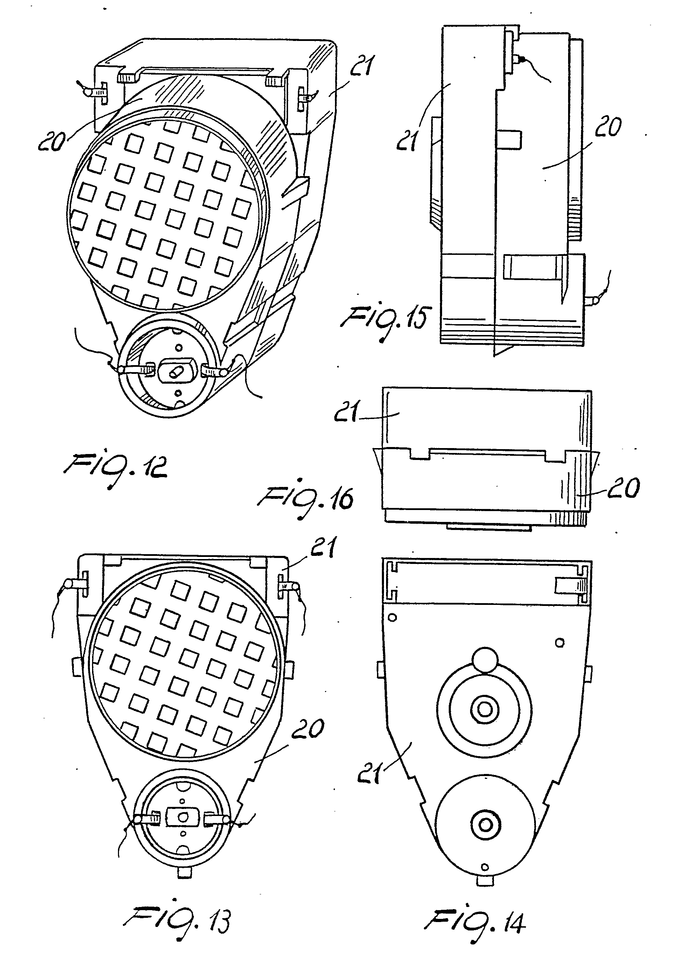

The device operation will be described with reference to Figures 3—11. Initially, when the stylus carrying arm 15 is at the record start position, as shown in Figures 3 and 8, the loudspeaker arm 2 presses on the stylus carrying arm 15 with its raised portion 3. During this stage, the arm 2 is in its raised position and applies no pressure to the clutch unit 10, which is then idle, i.e. it stands still. As the sylus carrying arm 15 is advanced, it reaches the termination of the raised portion 3. The action of the spring 16 causes then the loudspeaker arm 2 to be lowered, which therefore continues to bias the stylus carrying arm 15. Following the lowering of the arm 2, the pin 5 begins to exert a pressure on the coupling member 11, 12, which is moved downwards to overcome the bias of the spring 30, as shown in Figures 4 and 9. However, as in its rotation the projection 9 rigid with the phonographic disk carrier plate 6 finds itself at the groove 13 on the coupling member 11, 12, the projection 9 will penetrate the groove 13, thus making the clutch unit 10 rigid with the phonographic disk carrier plate 6 (see Figures 5 and 10). Thus, the coupling member 11, 12 will begin to rotate until (Figure 6) the protrusion 14 interferes with the pin 5 on the arm 2, causing it to be raised (Figures 7 and 11).

The stylus carrying arm 15, being no longer urged downwards by the arm 2, and thanks to the action of the arm return spring, will move back into a position corresponding to the start of the record and at the same time will engage the raised portion 3 and lift the arm 2, so that the coupling member 11, 12 will be raised by the action of spring 30 and will disengage from the projection 9 and stop. Thus, the record playing can be re-initiated.

With reference to Figures 12 to 16, there is shown an embodiment comprising a compact box-like casing which advantageously includes an upper half-shell 20 and lower half-shell 21 which can be snap joined together. With a box-like casing of this type, it becomes possible to make the loudspeaker arm fixed, and to make axially movable, under the action of an elastic means, the phonographic disk carrier plate 6, without altering the functional concepts set forth hereinabove.

In practicing the invention, the materials used and the dimensions may be any selected ones, depending on individual applications.

## Claims

1. A continuous playback device including a phonographic disk player for use in dolls and the like, which comprises an arm (2) supporting a loudspeaker (1), a stylus carrying arm (15) controlled by said loudspeaker supporting arm (2), a phonographic disk carrier plate (6) bored axially and having at least one bush (7, 8) rigid therewith and coaxial with said bore of said disk carrier plate (6) and a mechanism for displacing said loudspeaker supporting arm (2), characterized in that said mechanism comprises a clutch unit (10) having an axially shiftable coupling member (11, 12) arranged between said bush (7, 8) and said loudspeaker supporting arm (2) and supported for independent rotation about an axis coaxial with said bush (7, 8) said clutch unit (10) further comprising a radial projection (9) on the edge of the bush (7, 8) facing said coupling member (11, 12) and a groove (13) on a surface of said coupling member (11, 12) facing said bush (7, 8), said coupling member (11, 12) being normally spring biased in a position away from mutual engagement between said radial projection and said groove (9 and 13) thereby allowing said coupling member (11, 12) to stand still while the bush (7, 8) is rotated together with the disk carrier plate (6), said mechanism for displacing the loudspeaker supporting arm (2) comprising further a cam formation (14) on a surface of said coupling member (11, 12) facing said arm (2) and a cam follower formation (5) on the side of said loudspeaker supporting arm (2) facing said coupling member (11, 12), thereby to displace said arm (2) when said coupling member (11, 12) is put temporarily into rotation upon temporary axial shifting of said coupling member (11, 12) towards said bush (7, 8) by the action of said loudspeaker supporting arm (2) and consequent mutual engagement between said engagement formations (9 and 13).

2. A device according to claim 1, characterized in that said cam formation (14) has an annulus-like shape of variable height and said cam follower formation (5) is in the form of a pin projecting from an intermediate portion of said arm (2).

3. A device according to either of claims 1, 2, characterized in that said arm (2) has at the free end thereof a raised portion (3) of circular shape for maintaining in operative position said stylus carrying arm (15).

4. A device according to any one of the preceding claims, characterized in that it is accommodated within a box-like casing comprising an upper half-shell (20) and lower half-shell (21) arranged to be snap coupleable together.

## Revendications

1. Dispositif de play-back comportant un tourne-disque et destiné à être monté dans des poupées et similaires, du type comprenant un bras (2) supportant un haut-parleur (1), un bras (15) portant la pointe de lecture et contrôlé par le bras (2) supportant le haut-parleur (1), un plateau porte-disque (6) percé axialement et comportant au moins un manchon (7, 8) faisant corps avec lui et s'étendant coaxialement au trou de ce plateau, ainsi qu'un mécanisme pour le déplacement du bras (2) supportant le haut-parleur, caractérisé en ce que ce mécanisme comprend un ensemble d'accouplement (10) muni d'un organe d'accouplement (11, 12) déplaçable axialement, qui est disposé entre le manchon (7, 8) et le bras (2) supportant le haut-parleur, et qui est monté de façon à pouvoir tourner de façon indépendante autour d'un axe coaxial à celui du manchon (7, 8), en ce que l'ensemble d'accouplement (10) comprend en outre une saillie radiale (9) formée sur le bord du manchon (7, 8) situé du côté de l'organe d'accouplement (11, 12) et une gorge (13) ménagée sur une surface de cet organe d'accouplement (11, 12) située du côté du manchon (7, 8), cet organe d'accouplement (11, 12) étant normalement sollicité par ressort dans une position dans laquelle il n'y a pas engagement entre la saillie radiale (9) et la gorge (13), de façon à permettre à l'organe d'accouplement (11, 12) de rester immobile tandis que le manchon (7, 8) tourne avec la plateau porte-disque (6), en ce que le mécanisme de déplacement du bras (2) supportant le haut-parleur comprend en outre un profil de came (14) formé sur une face de l'organe d'accouplement (11, 12) située en vis-à-vis de ce bras (2) et un suiveur de came (5) formé sur le côté du bras (2) supportant le haut-parleur qui est situé du côté de l'organe d'accouplement (11, 12), de façon à déplacer ce bras (2) lorsque l'organe d'accouplement (11, 12) est amené temporairement en rotation lors d'un déplacement temporaire axial de cet organe d'accouplement (11, 12) en direction du manchon (7, 8) sous l'action du bras support de haut-parleur (2) et de l'engagement mutuel de la saillie (9) et de la gorge (13).

2. Dispositif selon la revendication 1, caractérisé en ce que le profil de came (14) a une forme annulaire de hauteur variable et en ce que le suiveur de came (5) a la forme d'un téton saillant à partir d'une partie intermédiaire du bras (2).

3. Dispositif selon l'une quelconque des revendications 1, 2, caractérisé en ce que le bras (2) présente à son extrémité libre une partie surélevée (3) de forme circulaire pour le maintien en position de travail du bras (15) portant la pointe de lecture.

4. Dispositif selon l'une quelconque des revendications précédentes, caractérisé en ce qu'il est disposé à l'intérieur d'une enveloppe en forme de boîte comprenant une demi-coquille supérieure (20) et une demi-coquille inférieure (21) aptes à être assemblées par encliquetage.

## Patentansprüche

1. Vorrichtung für kontinuierliche Wiedergabe mit Plattenspieler für Puppen u.dgl. mit einem einen Lautsprecher (1) tragenden Arm (2), einem durch den Lautsprecherhaltearm (2) betätigten Nadelhaltearm (15), einem Schallplattenteller (6) mit einer axialen Bohrung und wenigstens einer starr mit diesem verbundenen und koaxial zur Bohrung desselben verlaufenden Hülse (7, 8), und einem Mechanismus zum Verschieben des Lautsprecherhaltearmes (2), dadurch gekennzeichnet, dass der genannte Mechanismus aus einer Kupplung (10) mit einem axial verschiebbaren und zwischen der Hülse (7, 8) und dem Lautsprecherhaltearm (2) angeordneten und zur unabhängigen Drehung um eine koaxial zur Hülse (7, 8) verlaufenden Achse gelagerten Kupplungsglied (11, 12) besteht und die Kupplung (10) weiters einen radialen Fortsatz (9) auf der dem Kupplungsglied (11, 12) gegenüberliegenden Kante der Hülse (7, 8) und eine Rille (13) auf einer der Hülse (7, 8) gegenüberliegenden Fläche des Kupplungsgliedes (11, 12) aufweist, wobei das Kupplungsglied (11, 12) normalerweise durch eine Feder in eine Stellung ausserhalb des Eingriffes zwischen dem radialen Fortsatz und der Rille (9 und 13) gedrückt und es dadurch dem Kupplungsglied (11, 12) ermöglicht wird, stillzustehen, während die Hülse (7, 8) zusammen mit dem Schallplattenteller (6) gedreht wird, und der Mechanismus zum Verschieben des Lautsprecherhaltearmes (2) weiters einen Nocken (14) auf einer dem Arm (2) gegenüberliegenden Fläche des Kupplungsgliedes (11, 12) und einen Nockenstössel (5) auf der dem Kupplungsglied (11, 12) gegenüberliegenden Seite des Lautsprecherhaltearmes (2) besitzt, um den Arm (2) zu verschieben, wenn das Kupplungsglied (11, 12) vorübergehend bei der vorübergehenden axialen Verschiebung des Kupplungsgliedes (11, 12) gegen die Hülse (7, 8) durch die Wirkung des Lautsprecherhaltearmes (2) und den folglichen gegenseitigen Eingriff zwischen den besagten Eingriffsausbildungen (9 und 13) vorübergehend in Drehung versetzt wird.

2. Vorrichtung nach Anspruch 1, dadurch gekennzeichnet, dass der Nocken (14) eine annulusartige Form veränderlicher Höhe besitzt und der Nockenstössel (5) die Form eines von einem Zwischenabschnitt des genannten Armes (2) vorspringenden Stiftes hat.

3. Vorrichtung nach einem der Ansprüche 1, 2, dadurch gekennzeichnet, dass der Arm (2) an seinem freien Ende eine runde Erhebung (3) besitzt, um den Nadelhaltearm (15) in Arbeitsstellung zu halten.

4. Vorrichtung nach einem der vorhergehenden Ansprüche, dadurch gekennzeichnet, dass sie in einem dosenartigen Gehäuse enthalten ist, das aus einer oberen Halbschale (20) und einer unteren Halbschale (21), die einschnappend miteinander verbunden werden, besteht.

Fig.1

Fig.2

Fig.3

Fig.4

Fig.5

Fig.6

Fig.7

Fig.8

Fig.9

Fig.10

Fig.11

**Fig.12**

**Fig.15**

**Fig.16**

**Fig.13**

**Fig.14**